# FASCICULE DE BREVET EUROPEEN

(11) **EP 4 069 564 B1**
(45) Date de publication et mention de la délivrance du brevet: **27.12.2023**
(21) Numéro de dépôt: 20861953.6
(22) Date de dépôt: 12.11.2020
(51) Int. Cl.: B60W 20/16, B60W 20/40, B60W 20/13, B60W 10/06, B60W 10/08, B60W 50/12, B60K 6/48, B60K 6/387, B60K 6/547, B60W 30/192

(54) **PROCEDE ET CALCULATEUR DE GESTION D'UNE MISE EN FONCTIONNEMENT D'UN VEHICULE AUTOMOBILE DE TYPE HYBRIDE**
VERFAHREN UND RECHNER ZUR STEUERUNG DER INBETRIEBNAHME EINES HYBRIDKRAFTFAHRZEUGS
METHOD AND CALCULATOR FOR MANAGING A START-UP OF A HYBRID-TYPE MOTOR VEHICLE

(30) Priorité: 03.12.2019 FR 1913634
(43) Date de publication de la demande: 12.10.2022
(73) Titulaire: Stellantis Auto SAS, 78300 Poissy (FR)
(72) Inventeur: SCHAEFFER, Eric, 75013 Paris (FR); HABBANI, Ridouane, 92600 Asnières sur Seine (FR)
(86) Numéro de dépôt international: PCT/FR2020/052061
(87) Numéro de publication internationale: WO 2021/111048

(56) Documents cités:
- WO-A1-2016/046617
- DE-A1-102006 051 832
- DE-A1-102017 126 091
- DE-T2- 69 312 794
- FR-A1- 2 947 789
- US-A1- 2014 297 088

## Description

La présente invention revendique la priorité de la demande française N°1913634 déposée le 03.12.2019.

La présente invention porte sur un procédé de gestion d'une mise en fonctionnement d'un véhicule automobile de type hybride, c'est-à-dire un véhicule comportant un moteur thermique et un moteur électrique de traction pouvant fonctionner indépendamment ou en combinaison l'un avec l'autre. L'invention trouve une application particulièrement avantageuse lors d'un démarrage à froid du véhicule automobile hybride.

Le système de dépollution des gaz d'échappement d'un moteur thermique est basé sur l'utilisation d'un catalyseur dont la configuration varie en fonction de la motorisation. Pour les véhicules équipés d'un moteur thermique de type essence à injection directe, la dépollution est réalisée par un catalyseur, dit trois voies (ou TWC pour "Three Way catalytic Converter" en anglais) et un filtre à particules (ou GPF pour "Gasoline Particulate Filter" en anglais). Pour les véhicules de type diesel, la dépollution est réalisée par une série de catalyseurs, par exemple un catalyseur d'oxydation (DOC pour "Diesel Oxydation Catalyst" en anglais) associé à un catalyseur de réduction sélective (SCR pour "Sélective Catalytic Réduction" en anglais) et par un filtre à particules.

La phase de démarrage à froid d'un véhicule hybride présente, comme pour les véhicules thermiques classiques, un risque élevé d'émission de particules polluantes en grande concentration. Pour remédier à ce problème, une stratégie courante consiste à chauffer le catalyseur par différents procédés afin que le catalyseur atteigne une certaine température, dite température d'amorçage, lui permettant d'être efficace pour traiter les particules polluantes. Cette montée en température, générée par la température des gaz d'échappement et/ou par un équipement extérieur (chauffage électrique), est plus ou moins rapide selon la technologie retenue pour le substrat du catalyseur.

Il est également possible de prévoir une batterie surdimensionnée pour garantir un démarrage à froid en mode électrique. Toutefois, les dispositifs de chauffe additionnels ainsi que le surdimensionnement de la batterie engendrent un surcoût important ainsi qu'une augmentation sensible de la masse du véhicule.

On connait par exemple du document de brevet DE-A1-102006051832 un procédé selon le préambule de la revendication 1. On connait d'autre part des documents de brevet DE-T2-69312794 et DE-A1-102017126091 des procédés de contrôle de véhicules hybrides.

L'invention vise à optimiser une phase de démarrage à froid d'un véhicule hybride. A cette fin, l'invention a pour objet un procédé de gestion d'une mise en fonctionnement d'un véhicule automobile de type hybride muni d'une chaîne de traction comportant:
- un moteur thermique associé à un catalyseur, un moteur électrique de traction relié électriquement à une batterie, un embrayage, et une boîte de vitesses montés sur un train du véhicule automobile,
- suite à une demande de mise en mouvement du véhicule automobile, ledit procédé comporte:
- une étape de mesure d'une température du catalyseur,
- une étape de détermination d'un niveau de charge de la batterie, et
- une étape d'autorisation ou non de la mise en mouvement du véhicule automobile en fonction de la température mesurée du catalyseur et du niveau de charge de la batterie précédemment déterminé.

L'invention permet ainsi de garantir une mise en mouvement du véhicule uniquement si les conditions de fonctionnement du moteur thermique et/ou du moteur électrique de traction sont favorables pour minimiser une émission de particules polluantes lors d'un démarrage à froid du véhicule automobile.

Selon une mise en oeuvre, dans le cas où la température mesurée du catalyseur est inférieure à un seuil minimal de température, ledit procédé comporte une étape de démarrage du moteur thermique tout en interdisant une mise en fonctionnement du véhicule automobile dans un mode de roulage thermique, ledit mode de roulage thermique étant interdit jusqu'à ce qu'une stratégie de chauffage du catalyseur permette audit catalyseur d'atteindre le seuil minimal de température.

Selon une mise en oeuvre, dans le cas où le niveau de charge de la batterie est en outre inférieur à un seuil minimal de niveau de charge, ledit procédé comporte une étape d'interdiction d'une mise en mouvement du véhicule automobile.

Selon une mise en oeuvre, le moteur thermique entraîne en rotation le moteur électrique de traction fonctionnant en mode générateur pour transformer une énergie mécanique fournie par le moteur thermique en une énergie électrique permettant de recharger la batterie jusqu'au seuil minimal de niveau de charge.

Selon une mise en oeuvre, le moteur électrique de traction prélève un couple au moteur thermique de façon à augmenter une température de gaz d'échappement et accélérer une chauffe du catalyseur.

Selon une mise en oeuvre, lorsque le niveau de charge de la batterie devient supérieur au seuil minimal de niveau de charge, ledit procédé comporte une étape d'activation d'un mode de roulage électrique pur, tout en ouvrant l'embrayage pour permettre au moteur thermique de continuer à fonctionner pour augmenter une température du catalyseur sans participer à une traction du véhicule automobile.

Selon une mise en oeuvre, ledit procédé comporte une étape d'affichage d'un compte à rebours correspondant à un temps nécessaire au moteur thermique pour atteindre le seuil minimal de température et/ou à un temps nécessaire à la batterie pour atteindre le seuil minimal de niveau de charge autorisant un mode de roulage électrique pur.

Selon une mise en oeuvre, dans le cas où la boîte de vitesses est de type automatique, ledit procédé comporte une étape d'inhibition d'un mode de conduite en marche avant jusqu'à ce que le moteur thermique ait atteint le seuil minimal de température ou que la batterie ait atteint le seuil minimal de niveau de charge autorisant un mode de roulage électrique pur.

Selon une mise en oeuvre, la stratégie de chauffage du catalyseur consiste à faire fonctionner le moteur thermique dans un mode dégradé, notamment en dégradant une avance à l'allumage.

L'invention a également pour objet un calculateur comportant une mémoire stockant des instructions logicielles pour la mise en oeuvre du procédé de gestion d'une mise en fonctionnement d'un véhicule automobile de type hybride tel que précédemment défini.

L'invention sera mieux comprise à la lecture de la description qui suit et à l'examen des figures qui l'accompagnent. Ces figures ne sont données qu'à titre illustratif mais nullement limitatif de l'invention.

[Fig. 1] La figure 1 est une représentation schématique d'une chaîne de traction pour véhicule automobile mettant en oeuvre un procédé selon l'invention de gestion d'une mise en fonctionnement d'un véhicule automobile de type hybride,

[Fig. 2] La figure 2 est un diagramme des étapes du procédé selon l'invention de gestion d'une mise en fonctionnement d'un véhicule automobile de type hybride.

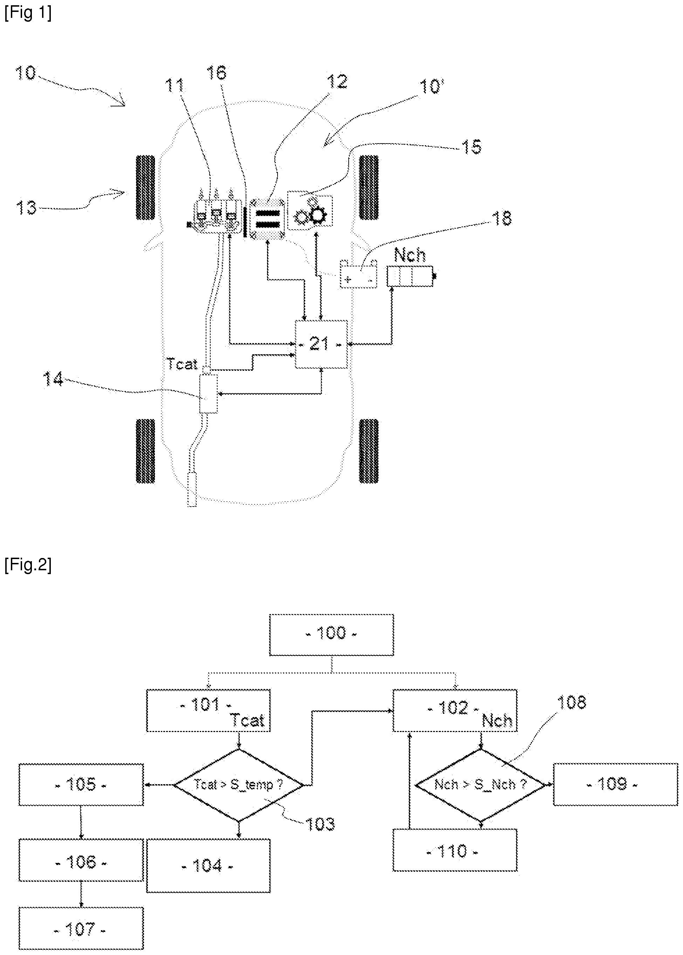

Plus précisément, la figure 1 montre un véhicule automobile 10 muni d'une chaîne de traction 10' comportant un moteur thermique 11 et un moteur électrique de traction 12 montés sur un train 13 du véhicule automobile 10, notamment un train avant. Le moteur thermique 11 est par exemple un moteur thermique à quatre cylindres. En variante, le moteur thermique 11 pourra bien entendu comporter un nombre différent de cylindres, notamment trois cylindres ou plus de quatre cylindres. Le moteur thermique 11 est associé à un catalyseur 14 visant à traiter les particules polluantes contenues dans les gaz d'échappement, notamment les oxydes d'azote (Nox) et les particules fines riches en hydrocarbures.

Le moteur thermique 11 est accouplé à une boîte de vitesses 15 par l'intermédiaire d'un embrayage 16. Un arbre de sortie de la boîte de vitesses 15 est connecté aux roues par l'intermédiaire d'un différentiel (non représenté). La boîte de vitesses 15 est par exemple une boîte de vitesses automatique.

Le moteur électrique de traction 12 est disposé entre l'embrayage 16 et la boîte de vitesses 15. A l'état ouvert, l'embrayage 16 permet d'isoler le moteur électrique de traction 12 par rapport au moteur thermique 11 lorsque le moteur électrique 12 assure une traction du véhicule automobile 10 dans un mode de roulage électrique. L'embrayage 16 est fermé dans un mode de roulage thermique ou hybride dans lequel le moteur thermique 11 et le moteur électrique 12 participent à la traction du véhicule.

Une batterie 18 est reliée électriquement au moteur électrique de traction 12. La batterie 18 et le moteur électrique de traction 12 présentent de préférence une tension de fonctionnement de l'ordre de 48 Volts. En variante, la tension de fonctionnement de la batterie 18 et du moteur électrique de traction 12 pourrait toutefois être supérieure, notamment comprise entre 300 Volts et 340 Volts.

Le moteur électrique de traction 12 est apte à transformer une énergie électrique issue de la batterie 18 en une énergie mécanique pour assurer une traction du véhicule automobile 10. Le moteur électrique de traction 12 est également apte à fonctionner dans un mode générateur dans lequel le moteur électrique 12 transforme une énergie cinétique du véhicule en une énergie électrique permettant de recharger la batterie 18, notamment lors d'une phase de freinage récupératif.

Un calculateur 21 assure le pilotage des différents composants de la chaîne de traction 10'. Afin d'effectuer la mesure de la température du catalyseur 14, un capteur de température 22 est relié à une entrée du calculateur 21.

Ce calculateur 21, dit également superviseur dans la suite du document, comporte une mémoire stockant des instructions logicielles pour la mise en oeuvre du procédé selon l'invention de gestion d'une mise en fonctionnement du véhicule dont les différentes étapes sont décrites ci-après en référence avec la figure 2.

Le véhicule automobile 10 étant à l'arrêt, le superviseur 21 reçoit dans une étape 100, une demande de mise en mouvement du véhicule automobile 10.

Le superviseur 21 effectue, via le capteur 22, une mesure de la température du catalyseur 14 dans une étape 101. Le superviseur 21 détermine un niveau de charge Nch de la batterie 18 dans une étape 102. Le superviseur 21 autorise ensuite ou non la mise en mouvement du véhicule automobile 10 en fonction de la température du catalyseur 14 mesurée et du niveau de charge Nch de la batterie 18 précédemment déterminé.

Plus précisément, le superviseur 21 compare, dans une étape 103, la température mesurée Tcat avec un seuil minimal de température S_temp qui est par exemple la température d'amorçage du catalyseur 14. La température d'amorçage dépend du catalyseur 14 utilisé. La température d'amorçage S_temp est par exemple comprise entre 750 et 800 degrés Celsius.

Dans le cas où la température mesurée Tcat est supérieure à la température d'amorçage S_temp, le superviseur 21 autorise, dans une étape 104, une mise en fonctionnement du véhicule automobile 10 dans un mode de roulage thermique ou hybride.

Dans le cas où la température du catalyseur 14 est inférieure à la température d'amorçage S_temp, le superviseur 21 interdit, dans une étape 105, une mise en fonctionnement du véhicule automobile 10 dans un mode de roulage thermique tout en commandant, dans une étape 106, un démarrage du moteur thermique 11. Le mode de roulage thermique est interdit jusqu'à ce qu'une stratégie de chauffage du catalyseur 14, mise en oeuvre dans une étape 107, permette au catalyseur 14 d'atteindre le seuil minimal de température S_temp.

La stratégie de chauffage du catalyseur 14 pourra consister à faire fonctionner le moteur thermique 11 dans un mode dégradé, notamment en dégradant l'avance à l'allumage.

Par ailleurs, le superviseur 21 compare, dans une étape 108, le niveau de charge Nch précédemment déterminé avec un seuil minimal de niveau de charge S_Nch. Le seuil minimal de niveau de charge S_Nch est par exemple compris entre 20% et 25% du niveau de charge maximal de la batterie 18, pour une batterie 18 ayant une tension de fonctionnement de 48 Volts.

Dans le cas où le niveau de charge Nch de la batterie 18 est supérieur au seuil minimal de niveau de charge S_Nch, le superviseur 21 autorise une mise en fonctionnement du véhicule automobile 10 dans un mode de roulage électrique dans une étape 109.

Dans le cas où le niveau de charge Nch de la batterie 18 est inférieur au seuil minimal de niveau de charge S_Nch (et que le seuil minimal de température S_temp du catalyseur 14 n'est pas atteint), le superviseur 21 interdit la mise en mouvement du véhicule automobile 10, dans une étape 110.

Le moteur thermique 11 entraîne alors en rotation le moteur électrique de traction 12 fonctionnant en mode générateur pour transformer une énergie mécanique fournie par le moteur thermique 11 en une énergie électrique permettant de recharger la batterie 18. Il est possible d'utiliser le moteur électrique de traction 12 pour prélever un couple au moteur thermique 11 de façon à augmenter la température des gaz d'échappement et ainsi accélérer la chauffe du catalyseur 14.

Lorsque le niveau de charge Nch de la batterie 18 devient supérieur au seuil, le superviseur 21 active un mode de roulage électrique pur, tout en ouvrant l'embrayage pour permettre au moteur thermique 11 de continuer à fonctionner pour augmenter une température du catalyseur 14 sans participer à une traction du véhicule automobile 10.

L'invention permet, grâce au rechargement de la batterie 18 par le moteur électrique 12 fonctionnant en générateur, d'avoir recours à une batterie 18 de faible capacité de stockage d'énergie à moindre en coût et plus légère qu'une batterie 18 surdimensionnée pour garantir un démarrage à froid du véhicule automobile 10 dans un mode de roulage électrique pur.

Le superviseur 21 pourra également afficher un compte à rebours correspondant à un temps nécessaire au moteur thermique 11 pour atteindre le seuil minimal de température S_temp et/ou à un temps nécessaire à la batterie 18 pour atteindre le seuil minimal de niveau de charge S_Nch autorisant un roulage en mode électrique pur.
Dans le cas où la boîte de vitesses est de type automatique, le superviseur 21 pourra inhiber un mode de conduite en marche avant (mode "D" pour "Drive" en anglais) jusqu'à ce que le moteur thermique 11 ait atteint le seuil minimal de température S_temp ou que la batterie 18 ait atteint le seuil minimal de niveau de charge S_Nch autorisant un mode de roulage électrique pur.

## Revendications

1. Procédé de gestion d'une mise en fonctionnement d'un véhicule automobile (10) de type hybride muni d'une chaîne de traction (10') comportant:
- un moteur thermique (11) associé à un catalyseur (14), un moteur électrique de traction (12) relié électriquement à une batterie (18), un embrayage (16), et une boîte de vitesses (15) montés sur un train (13) du véhicule automobile, et suite à une demande de mise en mouvement du véhicule automobile (10), ledit procédé comporte:
- une étape de mesure d'une température (Tcat) du catalyseur (14) et
- une étape de détermination d'un niveau de charge (Nch) de la batterie, **caractérisé en ce que** qu'il comporte
- une étape d'autorisation ou non de la mise en mouvement du véhicule automobile (10) en fonction de la température mesurée (Tcat) du catalyseur (14) et du niveau de charge (Nch) de la batterie (18) précédemment déterminé.

2. Procédé selon la revendication 1, **caractérisé en ce que** dans le cas où la température mesurée (Tcat) du catalyseur (14) est inférieure à un seuil minimal de température (S_temp), ledit procédé comporte une étape de démarrage du moteur thermique (11) tout en interdisant une mise en fonctionnement du véhicule automobile (10) dans un mode de roulage thermique, ledit mode de roulage thermique étant interdit jusqu'à ce qu'une stratégie de chauffage du catalyseur (14) permette audit catalyseur (14) d'atteindre le seuil minimal de température (S_temp).

3. Procédé selon la revendication 2, **caractérisé en ce que** dans le cas où le niveau de charge (Nch) de la batterie (18) est inférieur à un seuil minimal de niveau de charge (S_Nch), ledit procédé comporte une étape d'interdiction d'une mise en mouvement du véhicule automobile (10).

4. Procédé selon la revendication 3, **caractérisé en ce que** le moteur thermique (11) entraîne en rotation le moteur électrique de traction (12) fonctionnant en mode générateur pour transformer une énergie mécanique fournie par le moteur thermique (11) en une énergie électrique permettant de recharger la batterie (18) jusqu'au seuil minimal de niveau de charge (S_Nch).

5. Procédé selon la revendication 4, **caractérisé en ce que** le moteur électrique de traction (12) prélève un couple au moteur thermique (11) de façon à augmenter une température de gaz d'échappement et accélérer une chauffe du catalyseur (14).

6. Procédé selon la revendication 4 ou 5, **caractérisé en ce que**, lorsque le niveau de charge (Nch) de la batterie (18) devient supérieur au seuil minimal de niveau de charge (S_Nch), ledit procédé comporte une étape d'activation d'un mode de roulage électrique pur, tout en ouvrant l'embrayage (16) pour permettre au moteur thermique (11) de continuer à fonctionner pour augmenter une température du catalyseur (14) sans participer à une traction du véhicule automobile (10).

7. Procédé selon les revendications 2 et 4, **caractérisé en ce qu'**il comporte une étape d'affichage d'un compte à rebours correspondant à un temps nécessaire au moteur thermique (11) pour atteindre le seuil minimal de température (S_temp) et/ou à un temps nécessaire à la batterie (18) pour atteindre le seuil minimal de niveau de charge (S_Nch) autorisant un mode de roulage électrique pur.

8. Procédé selon les revendications 2 et 4, **caractérisé en ce que**, dans le cas où la boîte de vitesses est de type automatique, ledit procédé comporte une étape d'inhibition d'un mode de conduite en marche avant jusqu'à ce que le moteur thermique (11) ait atteint le seuil minimal de température (S_temp) ou que la batterie (18) ait atteint le seuil minimal de niveau de charge (S_Nch) autorisant un mode de roulage électrique pur.

9. Procédé selon l'une quelconque des revendications 2 à 8, **caractérisé en ce que** la stratégie de chauffage du catalyseur (14) consiste à faire fonctionner le moteur thermique (11) dans un mode dégradé, notamment en dégradant une avance à l'allumage.

10. Calculateur (21) comportant une mémoire stockant des instructions logicielles pour la mise en oeuvre du procédé de gestion d'une mise en fonctionnement d'un véhicule automobile (10) de type hybride tel que défini selon l'une quelconque des revendications précédentes.

## Patentansprüche

1. Verfahren zur Verwaltung des Betriebs eines Kraftfahrzeugs (10) vom Hybridtyp, das mit einer Antriebskette (10') ausgestattet ist, umfassend:
- eine Wärmekraftmaschine (11), die mit einem Katalysator (14) verbunden ist, einen elektrischen Fahrmotor (12), der elektrisch mit einer Batterie (18) verbunden ist, eine Kupplung (16) und ein Getriebe (15), das an einem Zug (13) montiert ist. des Kraftfahrzeugs, **dadurch gekennzeichnet, dass** das Verfahren nach einer Aufforderung, das Kraftfahrzeug (10) in Bewegung zu setzen, Folgendes umfasst:
- einen Schritt zum Messen einer Temperatur (Tcat) des Katalysators (14),
- einen Schritt zum Bestimmen eines Ladezustands (Nch) der Batterie und
- einen Schritt zum Genehmigen oder Nicht-Anfahren des Kraftfahrzeugs (10) entsprechend der gemessenen Temperatur (Tcat) des Katalysators (14) und dem zuvor bestimmten Ladezustand (Nch) der Batterie (18).

2. Verfahren nach Anspruch 1, **dadurch gekennzeichnet, dass** das Verfahren für den Fall, dass die gemessene Temperatur (Tcat) des Katalysators (14) unter einem minimalen Temperaturschwellenwert (S_temp) liegt, einen Schritt des Startens der Wärmekraftmaschine (11) umfasst, während der Betrieb des Kraftfahrzeugs (10) in einem thermischen Fahrmodus verboten wird, wobei der thermische Fahrmodus solange verboten wird, bis eine Katalysator-Heizstrategie (14) es dem Katalysator (14) ermöglicht, den minimalen Temperaturschwellenwert (S_temp) zu erreichen.

3. Verfahren nach Anspruch 2, **dadurch gekennzeichnet, dass** für den Fall, dass der Ladezustand (Nch) der Batterie (18) niedriger als ein minimaler Ladezustandsschwellenwert (S_Nch) ist, das Verfahren einen Schritt zum Verhindern einer Inbetriebnahme der Batterie umfasst Kraftfahrzeug (10).

4. Verfahren nach Anspruch 3, **dadurch gekennzeichnet, dass** die Wärmekraftmaschine (11) den im Generatormodus arbeitenden elektrischen Traktionsmotor (12) in Rotation versetzt, um die von der Wärmekraftmaschine (11) gelieferte mechanische Energie in elektrische Energie umzuwandeln, die das Aufladen der Batterie ermöglicht (18) auf den minimalen Ladezustandsschwellenwert (S_Nch).

5. Verfahren nach Anspruch 4, **dadurch gekennzeichnet, dass** der elektrische Fahrmotor (12) ein Drehmoment von der Wärmekraftmaschine (11) aufnimmt, um die Temperatur der Abgase zu erhöhen und die Erwärmung des Katalysators (14) zu beschleunigen.

6. Verfahren nach Anspruch 4 oder 5, **dadurch gekennzeichnet, dass**, wenn der Ladezustand (Nch) der Batterie (18) den Mindestladezustandsschwellenwert (S_Nch) überschreitet, das Verfahren einen Schritt des Aktivierens eines rein elektrischen Fahrmodus umfasst, während die Kupplung (16) geöffnet wird, damit der Wärmemotor (11) weiterarbeiten kann, um eine Temperatur des Katalysators (14) zu erhöhen, ohne an der Traktion des Kraftfahrzeugs (10) teilzunehmen.

7. Verfahren nach den Ansprüchen 2 und 4, **dadurch gekennzeichnet, dass** es einen Schritt der Anzeige eines Countdowns umfasst, der einer Zeit entspricht, die die Wärmekraftmaschine (11) benötigt, um die Mindesttemperaturschwelle (S_temp) zu erreichen, und/oder einer Zeit, die für die Batterie erforderlich ist (18) um den minimalen Ladezustandsschwellenwert (S_Nch) zu erreichen, der einen rein elektrischen Fahrmodus zulässt.

8. Verfahren nach den Ansprüchen 2 und 4, **dadurch gekennzeichnet, dass** das Verfahren für den Fall, dass es sich um ein Automatikgetriebe handelt, einen Schritt umfasst, bei dem ein Fahrmodus im Vorwärtsgang gesperrt wird, bis die Motorwärme (11) die Mindesttemperatur erreicht hat Schwelle (S_temp) oder die Batterie (18) hat die Mindestladezustandsschwelle (S_Nch) erreicht, die einen rein elektrischen Fahrmodus ermöglicht.

9. Verfahren nach einem der Ansprüche 2 bis 8, **dadurch gekennzeichnet, dass** die Strategie zum Aufheizen des Katalysators (14) darin besteht, die Wärmekraftmaschine (11) in einem abgeschwächten Modus zu betreiben, insbesondere durch Herabsetzen eines Zündvorlaufs.

10. Computer (21), der einen Speicher umfasst, der Softwareanweisungen zur Implementierung des Verfahrens zur Verwaltung des Betriebs eines Kraftfahrzeugs (10) vom Hybridtyp nach einem der vorhergehenden Ansprüche speichert.

## Claims

1. Method for managing the operation of a motor vehicle (10) of the hybrid type equipped with a traction chain (10') comprising:
- a heat engine (11) associated with a catalyst (14), an electric traction motor (12) electrically connected to a battery (18), a clutch (16), and a gearbox (15) mounted on a train (13) of the motor vehicle,
**characterized in that**, following a request to set the motor vehicle (10) in motion, said method comprises:
- a step for measuring a temperature (Tcat) of the catalyst (14),
- a step of determining a charge level (Nch) of the battery, and
- a step of authorizing or not the setting in motion of the motor vehicle (10) according to the measured temperature (Tcat) of the catalyst (14) and the level of charge (Nch) of the battery (18) previously determined.

2. Method according to Claim 1, **characterized in that** in the case where the measured temperature (Tcat) of the catalyst (14) is lower than a minimum temperature threshold (S_temp), the said method comprises a step of starting the heat engine (11) while prohibiting operation of the motor vehicle (10) in a thermal driving mode, said thermal driving mode being prohibited until a catalyst heating strategy (14) allows said catalyst (14) to reach the minimum temperature threshold (S_temp).

3. Method according to claim 2, **characterized in that** in the case where the charge level (Nch) of the battery (18) is lower than a minimum charge level threshold (S_Nch), said method includes a step of prohibiting a setting in motion of the motor vehicle (10).

4. Method according to claim 3, **characterized in that** the heat engine (11) rotates the electric traction motor (12) operating in generator mode to transform mechanical energy supplied by the heat engine (11) into electrical energy making it possible to recharging the battery (18) to the minimum charge level threshold (S_Nch).

5. Method according to Claim 4, **characterized in that** the electric traction motor (12) takes torque from the heat engine (11) so as to increase the temperature of the exhaust gas and accelerate the heating of the catalyst (14).

6. Method according to Claim 4 or 5, **characterized in that**, when the charge level (Nch) of the battery (18) becomes greater than the minimum charge level threshold (S_Nch), the said method comprises a step of activating a pure electric driving mode, while opening the clutch (16) to allow the thermal engine (11) to continue to operate to increase a temperature of the catalyst (14) without participating in traction of the motor vehicle (10).

7. Method according to Claims 2 and 4, **characterized in that** it comprises a step of displaying a countdown corresponding to a time necessary for the heat engine (11) to reach the minimum temperature threshold (S_temp) and/or at a time required for the battery (18) to reach the minimum charge level threshold (S_Nch) authorizing a pure electric driving mode.

8. Method according to Claims 2 and 4, **characterized in that**, in the case where the gearbox is of the automatic type, the said method includes a step of inhibiting a driving mode in forward gear until the engine thermal (11) has reached the minimum temperature threshold (S_temp) or the battery (18) has reached the minimum charge level threshold (S_Nch) authorizing a pure electric driving mode.

9. Method according to any one of Claims 2 to 8, **characterized in that** the strategy for heating the catalyst (14) consists in operating the heat engine (11) in a degraded mode, in particular by degrading an ignition advance.

10. Computer (21) comprising a memory storing software instructions for implementing the method for managing the operation of a motor vehicle (10) of the hybrid type as defined according to any one of the preceding claims.
